# EUROPEAN PATENT SPECIFICATION

(11) **EP 2 775 055 B1**
(45) Date of publication and mention of the grant of the patent: **14.10.2015**
(21) Application number: 13157803.1
(22) Date of filing: 05.03.2013
(51) Int. Cl.: E04B 1/24, E04B 2/74, E06B 1/60, F16B 25/00

(54) **Method for fastening a frame to a frame stud**
Verfahren um einen Rahmen an einen Ständer zu befestigen
Méthode de fixation d'un cadre à un poteau

(43) Date of publication of application: 10.09.2014
(73) Proprietor: Knauf Danogips GmbH Tyskland - filial, 296 80 Åhus (SE)
(72) Inventor: Johansson, Patrick, 66060 Molkom (SE)
(74) Representative: Persson, Albin

(56) References cited:
- US-A- 5 590 505
- US-A- 5 713 176
- US-A1- 2012 011 805

## Description

### FIELD OF THE INVENTION

The present invention relates to a method for fastening a frame to a frame stud.

### PRIOR ART

Due to problems with moisture and mould in building structures steel studs are often used instead of wood studs. The steel studs are commonly manufactured by cold rolling and formed to a C. The heat conducting properties of the steel is limited by providing the steel stud with slits in the web, which slits can be elongated. This implies that the elongated slits are positioned alternately in a running bond, resulting in substantially improved heat insulating capability of the material. The drawback is that this also further weakens an already limited stability in the web of the stud, which is the part in which the frame is fastened. The thickness of the steel material is usually 1.0 mm but thicknesses of 1.5 and 2.0 mm are also common, primarily for frame studs when a greater stability is required. The slitting is only made partly in these frame studs. The reason is that one cannot screw in the portions provided with the slits. Of course this result in a substantial decrease of the insulating capabilities of the stud, resulting in increased running expenses for the building. Further, these very limited thicknesses do not result in any angular stability for the frame screw and movement of the frame screw, such as in the form of rocking, can also be present when the fasteners in the structure are subject to wind loads. All in all this results in a movement when the weather applies loads on the fastened component, including both windows and doors. This movement results in a plurality of different problems. Seals between the frame and the wall cannot withstand this over time and will result in moisture entering the wall. Crack formation in board materials and rendered surfaces in the façade, for example, can also occur.

One common type of frame stud comprises a steel profile having a web and flanges for increased stability of the frame stud. Such prior art frame studs are connected to other studs in a wall structure, so that the web of the frame stud is directed towards the frame and the flanges project in the opposite direction. During installation the frame is brought towards the web of the frame stud, possibly leaving space for insulation between the frame and the frame stud, wherein the frame is connected to the frame stud by means of frame screws introduced into holes in the frame and screwed into the web of the frame stud. To reduce the heat conducting properties of the frame studs slits are arranged, generally in an overlapping pattern, in the web of the frame studs.

US-5-713-176 discloses a method of fastening a frame to a C-shaped or U-shaped steel construction stud provided with inserts whereby the web of the construction stud is directed towards the frame.

A problem with such frame studs according to prior art is that it can be difficult to install the frames, which thus can result in a labour-intensive and expensive installation.

Another problem of such prior art frame studs is that they can result in an insufficient fastening of the frame.

Another problem with such prior art frame studs is that they can result in moisture penetrating the wall structure and crack formation therein.

### SUMMARY OF THE INVENTION

An object of the present invention is to avoid the above-mentioned problems of the prior art. The invention results in simple, reliable and efficient installation of a frame, which results in cost efficiency while the installed win-dow or the installed door is positioned in a stable manner and can resist relatively extensive stress.

Described herein is a frame stud comprising a profile having a web, a first flange projecting at an angle from the web, and a second flange arranged at a distance from the first flange and projecting at an angle from the web, characterised **in that** the first flange and the second flange comprise a first flange portion projecting at an angle from the web, and a second flange portion connected to the first flange portion, wherein the second flange portions are arranged projecting at an angle from the first flange portions and towards each other, forming a space between the flanges, that the profile is formed in a first material, and that a reinforcement of a second material is arranged in said space, wherein long sides of the reinforcement is directed towards the first flange portions, a first side of the reinforcement is directed towards the second flange portions and a second side of the reinforcement, opposite the first side, is directed towards the web. The shape of the profile and the reinforcement arranged therein result in a frame stud with increased stability and the possibility of a simplified installation of a frame. By means of the reinforcement and the shape of the profile a more rigid frame stud is provided. Simultaneously, an improved fastening by means of a screw, such as a frame screw, is provided due to the reinforcement, as movement of the screw around its fixing point in the profile is prevented.

The reinforcement can be connected to the profile mechanically by means of the flanges. For example, the reinforcement can be clamped between the web and the second flange portions. Hence, an efficient, reliable and environmentally friendly fastening between the reinforcement and the profile is provided. The reinforcement can be prefabricated, for example in the form of a strip or sheet of suitable material, and then connected to the profile by bending the flanges over the edges of the reinforcement. Alternatively, the reinforcement can be arranged in the space between the flanges of a finished profile. Alternatively, the reinforcement can be accomplished by applying the second material in the space between the flanges which then solidifies or hardens in the space to a continuous unit.

The second flange portions can extend toward each other, forming a gap between free ends of the second flange portions, wherein a central portion of the reinforcement can be exposed in the gap. The frame stud is installed having the exposed portion of the reinforcement directed towards the frame, wherein screws can be screwed into the frame stud through the reinforcement. The reinforcement can be made of a softer material than the profile, wherein it is easier to screw in the reinforcement. Hence, the screw can easily be brought to enter the reinforcement without sliding along its surface. Simultaneously, the reinforcement can form a fixing of the screw to prevent it from sliding along the surface of the web of the profile when the screw is to be screwed through it.

The web of the profile can be provided with slits to reduce the heat conductivity of the profile. Another advantage with the frame stud according to the invention is that the reinforcement can be arranged to seal the web of the profile to reduce moisture and air passing through the slits. When using conventional prior art steel studs, moisture and air sometimes can penetrate a wall framework through board joints, through-wall arrangements and at windows and doors. This is a substantial problem when using such steel studs as an air flow is transported between frame work sections through the slits in the web of the steel studs. The consequence of this can be a significant reduction of the insulating properties, which results in increased energy cost for heating, and that moisture conveyed with the air in the wall can degrade components in the structure. The reinforcement can be arranged for sealing slits present in the web of the profile, which can prevent or reduce leakage into the wall.

The invention relates to a method of installing a frame in a frame stud as described above, wherein the method includes the steps of
a) applying a frame section of the frame towards the frame stud, so that an outer side of the frame section is directed towards an exposed central portion of the reinforcement of the frame stud,
b) introducing a frame screw having a thread into the frame section, such as into a hole arranged in the frame section,
c) bringing a tip of the frame screw to engage the reinforcement,
d) driving a front portion of the frame screw into the reinforcement,
e) bringing the tip of the frame screw to engage the web of the profile,
f) forcing the front portion of the frame screw through the web of the profile,
g) bringing a thread of the frame screw to engage the frame stud, and
h) fastening the frame section to the frame stud by means of the frame screw.

Hence, one solution to the problems mentioned for the prior art can be to let a material, such as an inorganic material, in the form of a reinforcement interact with the steel profile of the frame stud. The reinforcement can be fastened mechanically in the profile, for example along its entire length or portions thereof. Further, the reinforcement arranged in the profite faces the frame to be installed, so that the frame screw is fastened in the profile through the reinforcement. Hence, the steel profile is provided with a reinforcement being effective independent on the position in which the screw is fastened in the frame stud. Movement around the fixing point of the screw in the frame stud, such as in the form of rocking, is also prevented as the materials of the reinforcement and the profile together result in a favourable lateral stability for the screw. The advantage with having the softer material of the reinforcement facing the fastener is that said material then fixes the position of the screw towards the screw point in the web of the profile. Hence, the screw is prevented from displacement along the surface during the drilling moment, which otherwise can be a problem for the installer. The screw for the frame stud according to the invention can advantageously be provided with a thread-free zone in its tip or in its front portion. Said thread-free zone can correspond to the total measure of the thickness of the reinforcement and the material thickness of the profile. Hence, the thread of the screw is prevented from pulling apart the reinforcement and the profile during installation or from weakening the softer material of the reinforcement. The reinforcement, which can be of various thicknesses depending on how strong a fastening that is desired, is locked by the flanges of the profile, which enclose the long sides of the reinforcement. Together with the shape of the screw this result in satisfactory interaction without further connection between the reinforcement and the profile.

Further characteristics and advantages of the present invention will become apparent from the description of the embodiments below, the appended drawings and the dependent claims.

### SHORT DESCRIPTION OF THE DRAWINGS

The invention will now be described more in detail with reference to the appended drawings, in which
Fig. 1 is a schematic front view of a part of a wall structure with a stud work, frame studs and a window,
Fig. 2 is a schematic perspective cross section view of a frame stud,
Fig. 3 is a schematic front or rear view of a frame stud,
Fig. 4 is a schematic side view of a frame stud according to Fig. 2,
Fig. 5 is a schematic view of a frame screw for installation of a frame in the frame stud according to one embodiment of the invention,
Fig. 6 is a schematic cross section view of the frame stud of Fig. 2, a part of a frame and a part of a stud work, in which the frame stud is connected to the stud work and a front portion of a frame screw has been brought through a reinforcement of the frame stud, and
Fig. 7 is a schematic cross section view according to claim 6, in which the frame is connected to the frame stud by means of the frame screw according to one embodiment of the invention.

### THE INVENTION

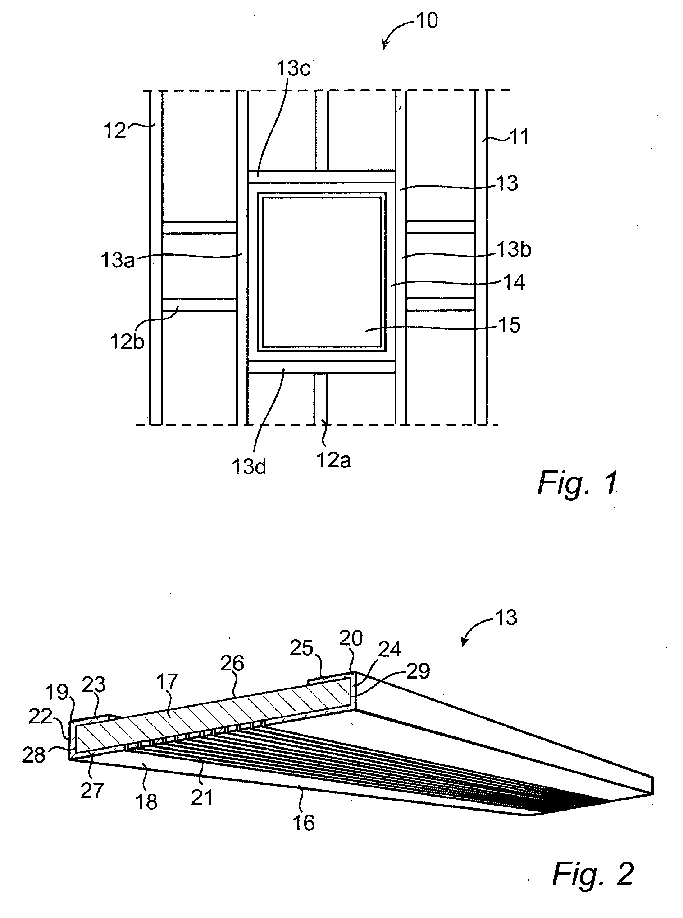

Referring to Fig. 1 a part of a wall structure 10 is illustrated schematically, the wall structure comprising a stud work 11 with studs 12, frame studs 13 and a frame 14 provided with a window 15. For example, the wall structure 10 further comprises a bottom track, top track, insulation, façade, etc., in a conventional manner, and which not are illustrated in the drawings. The studs 12 are, for example, conventional steel studs. Alternatively, the studs 12 are wooden studs or any other type of studs. In Fig. 1 the frame 14 is a window frame. It is however clear that the frame 14 correspondingly can be a door frame.

In Fig. 1 a first vertical frame stud 13a, a second vertical frame stud 13b, a first horizontal frame stud 13c and a second horizontal frame stud13d are illustrated. The frame studs 13 are connected to the stud work 11. For example, ends of the vertical frame studs 13a, 13b are received in the bottom track and the top track, respectively, and are connected thereto. The stud work comprises vertical studs 12a and horizontal studs 12b. For example, one or more horizontal studs 12b are arranged to stabilize the vertical frame studs 13a, 13b. In Fig. 1 a wall structure having vertical and horizontal studs 12a, 12b is illustrated.

With reference to Fig. 2 a part of the frame stud 13 is illustrated. The frame stud 13 comprises a profile 16 and a reinforcement 17. For example, the reinforcement 17 is connected to the profile mechanically. For example, the reinforcement 17 is arranged as a rectangular parallelepiped.

The profile 16 is formed in a first material, wherein the reinforcement 17 is formed in a second material. The second material is another material than the first material, wherein the profile 16 is formed in another material than the reinforcement 17. For example, the second material is softer than the first material, so that the reinforcement 17 is formed in a material being softer than the material of the profile 16. For example, the profile 16 is arranged in metal, such as steel. For example, the reinforcement 17 is arranged in a rigid material. For example, the reinforcement 17 is arranged in inorganic material, such as magnesium oxide. Alternatively, the reinforcement 17 is arranged in wood, such as plywood or similar. Alternatively, the reinforcement is arranged in a suitable plastic material or composite material.

The profile 16 comprises a web 18, a first flange 19 and a second flange 20. The web 18 is planar and provided with slits 21 to reduce the heat conductivity of the frame stud 13. For example, the slits 21 are arranged in a conventional manner in the web 18. The web 18 is connected to the first flange 19 and the second flange 20. For example, the flanges 19, 20 are formed by bending a base material forming the profile 16, such as a sheet of steel. The flanges 19, 20 extend, for example, along long sides of the web 18, such as along the entire length of the long sides, respectively, of the web 18, wherein the first flange 19 extends along a first long side of the web, and wherein the second flange 20 extends along a second long side of the web 18. Hence, the flanges 19, 20 are arranged at a distance from each other.

The first flange 19 comprises a first flange portion 22 and a second flange portion 23. Also the second flange 20 comprises a first flange portion 24 and a second flange portion 25. The first flange portions 22, 24 project in the same direction and are, for example, arranged in parallel to each other. For example, the first flange portions 22, 24 are equally long. The second flange portions 23, 25 extend in an angle, such as perpendicular, from the first flange portions 22, 24 and in a direction towards each other, forming a space between the flanges 19, 20 for the reinforcement 17. For example, the second flange portions 23, 25 are aligned with each other. For example, the second flange portions 23, 25 are arranged with free ends, which are arranged at a distance from each other, so that a central portion of a first side 26 of the reinforcement 17 is exposed. The reinforcement 17 fills up the entire space formed by the profile 16, so that a second side 27 of the reinforcement 17, opposite the first side 26, engages the web 18, long sides 28, 29 of the reinforcement 17 engages the first flange portions 22, 24 and edge portions of the first side of the reinforcement 17 engages the second flange portions 23, 25. For example, the reinforcement 17 is connected to the profile 16 mechanically by clamping the reinforcement 17 between the web 18 and the second flange portions 23, 25. Alternatively, the reinforcement 17 does not fill up the entire space of the profile 16, wherein the frame stud 16, for example, comprises spacers or similar between the reinforcement 17 and the profile 16. Hence, the reinforcement 17 is clamped in the profile 16, wherein the profile 16 encloses the long sides of the reinforcement 17.

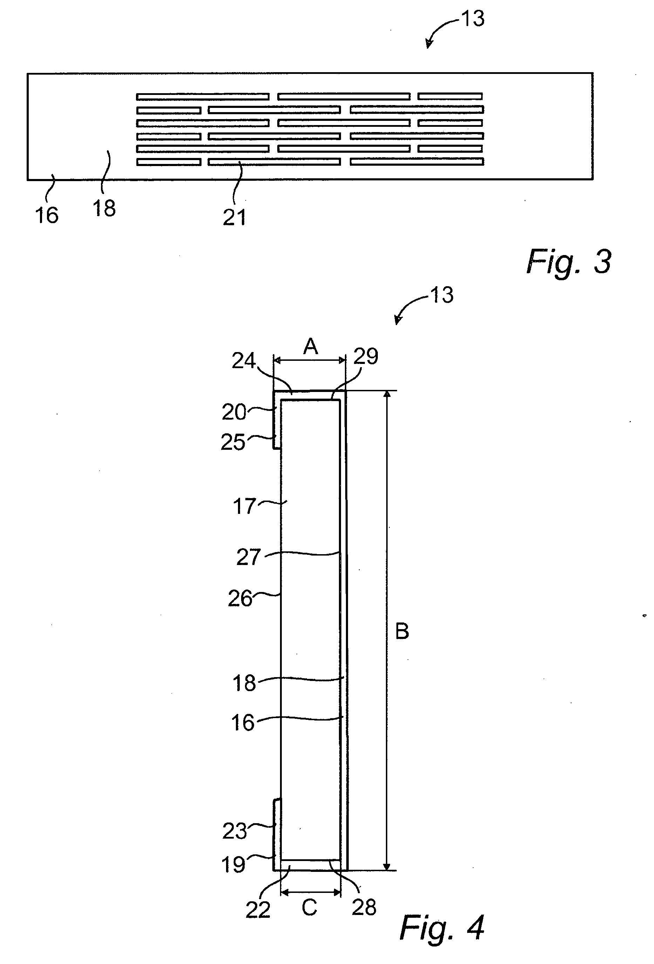

With reference to Fig. 3 the front or rear side of the frame stud 13 is illustrated, wherein a free side of the web 18, opposite the reinforcement 17, is illustrated more in detail. As evident from Fig. 3 the slits 21 in the web 18 are, for example, elongated and arranged in the longitudinal direction of the frame stud 13, wherein the slits 21 are arranged overlapping to reduce the heat conducting properties of the frame stud 13. The slits 21 are arranged in a central portion of the web 18. Alternatively, the slits 21 are arranged along the entire length and/or width of the web 18.

With reference to Fig. 4, the frame stud 13 is illustrated from the side where the entire web 18 engages the second side 27 of the reinforcement 17, wherein the first flange portions 22, 24 engages the long sides 28, 29 of the reinforcement, and wherein the second flange portions 23, 25 engages edge portions of the first side 26 of the reinforcement 17, so that the central portion thereof is exposed.

For example, the frame stud 13 is arranged with a thickness A of 5-100 mm, 10-50 mm, 10-30 mm or 15-20 mm. For example, the frame stud 13 is arranged with a width B of 50-200 mm, such as 70 mm, 95 mm or 120 mm. The material thickness of the profile 16 is, for example, 0.5-3 mm or 1-2 mm. Alternatively the thickness C of the reinforcement 17 is 15 mm, wherein the thickness A of the frame stud 13 is 17 mm.

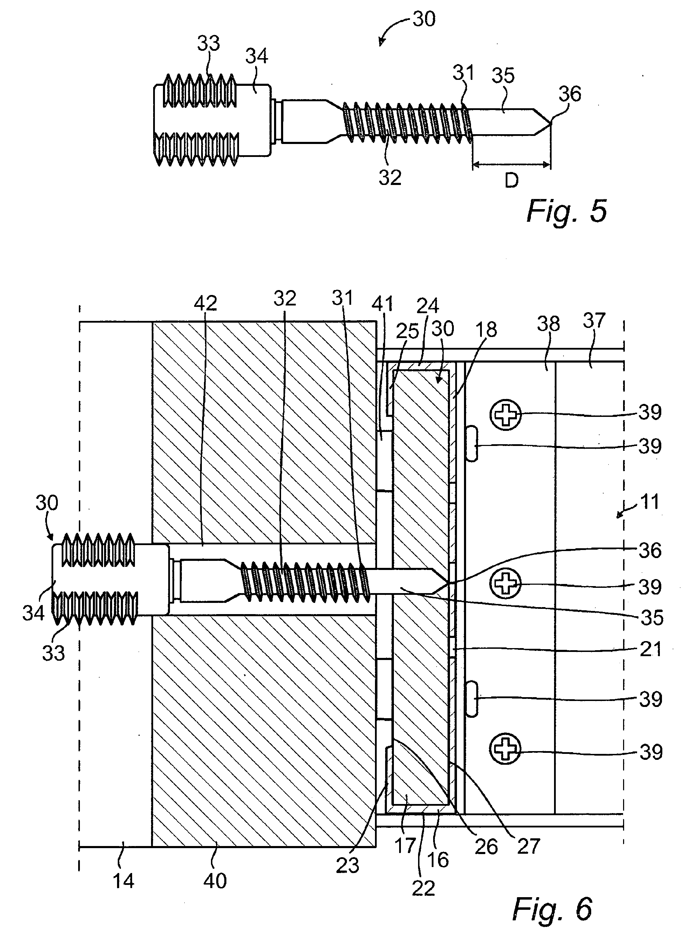

With reference to Fig. 5 a frame screw 30 for connecting the frame 14 to the frame stud 13 is illustrated. The frame screw 30 comprises a screw 32 with a first thread 31 and a sleeve 34 with a second thread 33. For example, the sleeve 34 with the second thread 33 is axially displaceable along an end portion of the screw 32 for adjusting the frame 14 in a conventional manner. A front portion 35 of the screw 32 is arranged to be brought through the frame stud 13 before the first thread 31 engages the reinforcement 17 of the frame stud 13. The front portion 35 forms a thread-free zone. Hence, the front portion 35 is arranged without any thread, forming a thread-free zone in a distance D between a tip 36 of the screw 32 and the first thread 31. The distance D is, for example, greater than or substantially equal to the thickness A of the frame stud 13. For example, the distance D is 10-50 mm, 15-40 mm or 20-30 mm. A surface of the front portion 35 is flush. Alternatively, the front portion 35 is arranged to drill through the frame stud 13, wherein the front portion 35, for example, is arranged as a drilling tool for cutting through the frame stud 13. For example, the thickness of the screw 32 is arranged so that the first thread 31 can engage the material of the web 18 around the slits 21. For example, the screw 32 is arranged with a thickness corresponding to or being greater than a width or height of the slits 21, wherein the first thread 31 is arranged for engaging the web 18. Alternatively the frame screw 30 is arranged without the sleeve 34.

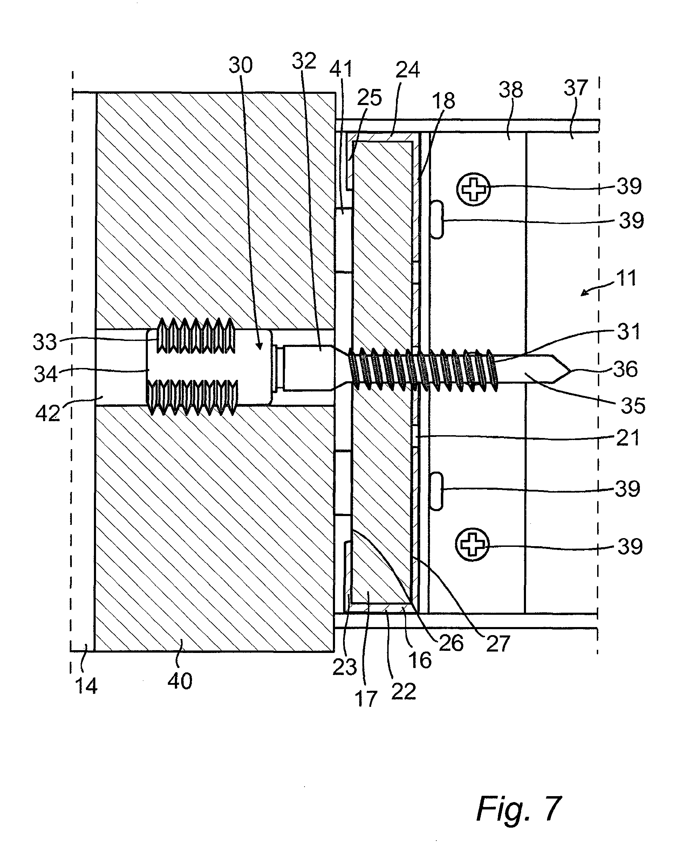

With reference to Fig. 6 and Fig. 7 installation of the frame 14 in the frame stud 13 by means of the frame screw 30 is illustrated schematically. As illustrated in Fig. 6 the frame stud 13 is connected to a bottom track 37 of the stud work 11 through an angle bar 38 and screws 39. For example, the frame stud 13 is connected to the stud work 11 by means of the screws 39, so that these penetrate through the profile 16 and into the reinforcement 17.

A frame section 40 of the frame 14 is brought towards the frame stud 13. For example, the frame section 40 is brought into contact with spacers 41, forming a gap between an outer side of the frame section 40 and the frame stud 13, which gap is arranged for receiving insulation in a conventional manner, the insulation not being disclosed in the drawings. The outer side of the frame section 40 is directed towards the second flange portions 23, 25 of the frame stud 13 and the exposed central portion of the first side 26 of the reinforcement 17. Then, the screw 32 of the frame screw 30 is introduced into the frame section 40. For example, the screw 32 is introduced into a prefabricated hole 42 in the frame section 40, as illustrated in Fig. 6. The screw 32 is inserted into the hole 42 until the tip 36 of the screw 32 abuts against the reinforcement 17, such as against the central portion of the first side 26. Then, the front portion 35 of the screw 32 is forced into the reinforcement 17, for example without the first thread 31 engaging the reinforcement 17. Then, the tip 36 of the screw 32 abuts against the web 18 of the profile 16. Due to the front portion 35 of the screw 32 being received in the reinforcement 17 radial displacement of the screw 32 is prevented when it is to be forced through the web 18 of the profile 16. Hence, an axial track for the screw 32 is formed, wherein the screw 32 is fixed in the radial direction, so that the tip 36 not slides along the surface of the web 18 but can be forced through it in a simple and efficient manner. After forcing the tip 36 of the screw 32 and the front portion 35 of the screw through the web 18 of the profile 16, the first thread 31 is brought to engage the frame stud 13. Hence, the screw 32 is connected to the frame stud 13, as illustrated in Fig. 7. The second thread 33 is brought to engage the frame section 40 in a conventional manner, wherein the position of the frame section 40 can be adjusted in the longitudinal direction of the screw by means of the sleeve 34 of the frame screw 30.

## Claims

1. A method of fastening a frame (14) to a frame stud (13) comprising a profile (16) having a web (18), a first flange (19) projecting at an angle from the web (18), and a second flange (20) arranged at a distance from the first flange (19) and projecting at an angle from the web (18), wherein
the first flange (19) and the second flange (20) comprise a first flange portion (22, 24) projecting at an angle from the web (18), and a second flange portion (23, 25) connected to the first flange portion, wherein the second flange portions (23, 25) are arranged projecting at an angle from the first flange portions (22, 24) and towards each other, forming a space between the flanges,
the profile (16) is formed in a first material, and
a reinforcement (17) of a second material is arranged in said space, wherein long sides (28, 29) of the reinforcement (17) are directed towards the first flange portions (22, 24), a first side (26) of the reinforcement (17) is directed towards the second flange portions (23, 25) and a second side (27) of the reinforcement (17), opposite the first side (26), is directed towards the web (18), wherein the method comprises the steps of
a) applying a frame section (40) of the frame (14) towards the frame stud (13), so that an outer side of the frame section (40) is directed towards an exposed central portion of the reinforcement (17) of the frame stud (13),
b) introducing a frame screw (30) having a thread (31) into a hole (42) arranged in the frame section (40),
c) bringing a tip (36) of the frame screw (30) to engage the reinforcement (17),
d) driving a front portion (35) of the frame screw (30) into the reinforcement (17),
e) bringing the tip (36) of the frame screw (30) to engage the web (18) of the profile (16),
f) forcing the front portion (35) of the frame screw (30) through the web (18) of the profile (16),
g) bringing a thread (31) of the frame screw (31) to engage the frame stud (13), and
h) fastening the frame section (40) to the frame stud (13) by means of the frame screw (30).

2. A method according to claim 1, including the step of performing steps c-g in said order.

3. A method according to claim 1 or 2, comprising the step of forming a radial fixing of the frame screw in step d.

4. A method according to any of claims 1-3, comprising the step of driving the front portion (35) of the frame screw (30) through the frame stud (13) before bringing the thread (31) of the frame screw (30) into engagement with the frame stud (13).

## Patentansprüche

1. Verfahren zum Befestigen eines Rahmens (14) an einem Rahmenständer (13), aufweisend ein Profil (16) mit einem Netz (18), wobei ein erster Flansch (19) in einem Winkel aus dem Netz (18) herausragt, und ein zweiter Flansch (20) in einer Entfernung von dem ersten Flansch (19) angeordnet ist und in einem Winkel aus dem Netz (18) herausragt, wobei
der erste Flansch (19) und der zweite Flansch (20) einen ersten Flanschabschnitt (22, 24), der in einem Winkel aus dem Netz (18) herausragt, und einen zweiten Flanschabschnitt (23, 25), der mit dem ersten Flanschabschnitt verbunden ist, aufweisen, wobei die zweiten Flanschabschnitte (23, 25) so angeordnet sind, dass sie in einem Winkel aus den ersten Flanschabschnitten (22, 24) herausragen und einander zugewandt sind, wodurch ein Raum zwischen den Flanschen gebildet wird,
das Profil (16) in einem ersten Material ausgebildet ist, und
eine Verstärkung (17) eines zweiten Materials in dem Raum angeordnet ist, wobei lange Seiten (28, 29) der Verstärkung (17) in Richtung der ersten Flanschabschnitte (22, 24) ausgerichtet sind, eine erste Seite (26) der Verstärkung (17) in Richtung der zweiten Flanschabschnitte (23, 25) ausgerichtet ist und eine zweite Seite (27) der Verstärkung (17), die der ersten Seite (26) gegenüberliegt, in Richtung des Netzes (18) ausgerichtet ist, wobei das Verfahren die folgenden Schritte aufweist:
a) Bewegen eines Rahmenabschnitts (40) des Rahmens (14) in Richtung des Rahmenständers (13), so dass eine Außenseite des Rahmenabschnitts (40) in Richtung eines freiliegenden mittigen Abschnitts der Verstärkung (17) des Rahmenständers (13) ausgerichtet wird,
b) Einführen einer Rahmenschraube (30), die ein Gewinde (31) aufweist, in ein Loch (42), das sich in dem Rahmenabschnitt (40) befindet,
c) Veranlassen einer Spitze (36) der Rahmenschraube (30), mit der Verstärkung (17) ineinanderzugreifen,
d) Treiben eines vorderen Abschnitts (35) der Rahmenschraube (30) in die Verstärkung (17),
e) Veranlassen der Spitze (36) der Rahmenschraube (30), mit dem Netz (18) des Profils (16) ineinanderzugreifen,
f) Drücken des vorderen Abschnitts (35) der Rahmenschraube (30) durch das Netz (18) des Profils (16),
g) Veranlassen eines Gewindes (31) der Rahmenschraube (31), mit dem Rahmenständer (13) ineinanderzugreifen, und
h) Befestigen des Rahmenabschnitts (40) an dem Rahmenständer (13) mithilfe der Rahmenschraube (30).

2. Verfahren nach Anspruch 1, einschließlich des Schritts des Ausführens der Schritte c bis g in dieser Reihenfolge.

3. Verfahren nach Anspruch 1 oder 2, aufweisend den Schritt des Ausbildens einer radialen Befestigung der Rahmenschraube in Schritt d.

4. Verfahren nach einem der Ansprüche 1 bis 3, aufweisend den Schritt des Treibens des vorderen Abschnitts (35) der Rahmenschraube (30) durch den Rahmenständer (13), bevor das Gewinde (31) der Rahmenschraube (30) mit dem Rahmenständer (13) in Eingriff gebracht wird.

## Revendications

1. Méthode de fixation d'un cadre (14) à un poteau de cadre (13) comprenant un profilé (16) disposant d'une âme (18), d'une première aile (19) formant un angle avec l'âme (18), et d'une seconde aile(20) située à une certaine distance de la première aile(19) et formant un angle avec l'âme (18), méthode dans laquelle
la première aile(19) et la seconde aile (20) sont composées d'une première portion d'aile (22, 24) formant un angle avec l'âme (18) et d'une seconde portion d'aile (23, 25) liée à la première portion de, où les secondes portions d'aile (23, 25) formant un angle avec les premières portions d'aile (22, 24) en direction l'une de l'autre, avec un espace entre lesailes,
le profil (16) est formé d'un premier matériau et
l'armature (17) d'un second matériau est disposée dans ledit espace, méthode dans laquelle les longs côtés (28, 29) de l'armature (17) sont orientés vers les premières portions de semelle (22, 24), un première côté (26) de l'armature (17) est orienté vers les secondes portions de semelle (23, 25) et un second côté (27) de l'armature (17), en face du premier côté (26), est orienté vers l'âme (18), la méthode comprenant les étapesconsistant à :
a) appliquer une section (40) du cadre (14) sur le poteau (13) de sorte qu'une partie extérieure de la section de cadre (40) soit dirigée vers une portion centrale exposée de l'armature (17) du poteau (13),
b) introduire une vis de cadre (30) taraudée (31) dans un trou (42) mélangé dans la section du cadre (40),
c) amener l'extrémité (36) de la vis de cadre (30) à s'engager dans l'armature (17),
d) insérer la partie avant (35) de la vis de cadre (30) dans l'armature (17),
e) amener l'extrémité (36) de la vis de cadre (30) à s'engager dans l'âme (18) du profilé (16),
f) forcer la partie avant (35) de la vis de cadre (30) à travers l'âme (18) du profilé (16),
g) amener un filetage (31) de la vis de cadre (30) à venir en engagement avec le poteau de cadre (13),
h) fixer la section de cadre (40) au poteau de cadre (13) à l'aide de la vis de cadre (30).

2. Méthode selon la revendication 1, y compris les étapes c à g, dans cet ordre.

3. Méthode selon la revendication 1 ou 2, comprenant l'étape de réalisation d'une fixation radiale de la vis de cadre de l'étape d.

4. Méthode selon l'une des revendications 1 à 3, comprenant l'étape d'insertion de la partie avant (35) de la vis de cadre (30) dans le poteau de cadre (13) avant d'amener le filetage (31) de la vis de cadre (30) à venir en engagement avec le poteau de cadre (13).
